# EUROPEAN PATENT APPLICATION

(11) **EP 2 270 938 A1**
(43) Date of publication of application: **05.01.2011**
(21) Application number: 08741586.5
(22) Date of filing: 07.03.2008
(51) Int. Cl.: H02B 1/50, E04H 12/12, H02G 3/12, B28B 21/14

(54) **ELECTRICAL SERVICE UNIT, PRODUCTION METHOD THEREOF AND MACHINE FOR SAME**

(71) Applicant: Felix Armenta, Julio César, Sonora (MX)
(72) Inventor: Felix Armenta, Julio César, Sonora (MX)
(74) Representative: ABG Patentes, S.L.
(86) International application number: PCT/MX2008/000039
(87) International publication number: WO 2009/110778

(57) **Abstract**

The invention relates to an electrical service unit made from reinforced concrete and having an elliptical cross-section and a base for anchoring same to the ground. The invention also includes a cornice and drip moulding and bases for housing a measuring apparatus and a thermal switch, as well as tubing embedded in the reinforced concrete in order to provide a connection between the exterior and the devices housed therein. The invention also relates to the machine required to produce the service unit, including a vibrating table which is supported by elastic supporting elements and capable of being hoisted by means of a pneumatic piston. The invention further relates to the method required to produce the electrical service units.

## Description

### TECHNICAL FIELD OF THE INVENTION

The technical field of the present invention resides in mechanics, mainly in the construction and electrical industries, since the invention provides a novel electrical service unit, as well as a method of manufacturing the same.

### BACKGROUND OF THE INVENTION

There are in Mexico, in these days, airborne and underground electrical service units, with documents registered before the Economy Ministry and before the Patent Office of the Mexican Institute for the Industrial Property (IMPI), according to a technical information report on patents, folio DDPSIT2.06454 dated March 20 thru April 17, 2006 from said Institute. Due to their aging, said designs are already obsolete and fail in complying with the quality standards CFE EM-BT101, EM-BT201, EM-BT301, EM-BT401, EM-BT104, EM-BT204, EM-BT404 and EM-BT305 and the respective official technical specifications provided for by the Federal Electricity Commission (CFE).

The electrical service units existing in the market incur in various failures in the compliance with the above cited standards. For instance, they do not have a stop or mark that shows to the man who is installing the same, the depth to which they must be installed; whereby the height of the measuring apparatus does not comply with the standard as established by the measuring department of the CFE, wherein a height of 1.4 to 1.6 meters is established from the floor to the upper face thereof. The depth to which said electrical service units must be buried cannot be checked by a CFE's inspector, since there are not a visible mark whatsoever. Furthermore, also against the standards, a great majority lack of a die-casted number of origin, whereby there are location problems upon reading the consumption or connecting the electrical service. Beyond the in force standards, said electrical service units of the present days have no rain protection for the electric measuring apparatus, thus decreasing the useful life period thereof. From an streamline consideration the squared shape of the existing electrical service units make them vulnerable under strong winds or hurricanes.

In the present days various types of machines have come into knowledge suitable to manufacture concrete bodies, concrete blocks and concrete tubing; but none suitable for the manufacture of concrete electrical service units at an industrial range.

The manufacture of electrical service units is deficient regarding both the quality of the product and the times of submission. When said electrical service units are to be acquired for a whole development area, they must be ordered more than six months before, and this without a warranty that the delivery term is complied with. This represents a serious problem for the companies that build housings, as they cannot deliver the buildings to the social interest housing managing institutions without an electrical service unit installed. Usually, said institutions maintain a long waiting list of applicants for the building and the applicants do not receive their houses in time. Therefore, there is a need for electrical service units that can be serially manufactured with delivery time warranties and complying with the Federal Electricity Commission (CFE) standards.

This invention discloses an electrical service unit, capable of comply completely satisfactorily with the in force standards as established by the Federal Electricity Commission, and also a machine and a process for the manufacture of said electrical service unit.

### DESCRIPTION OF THE INVENTION

The characteristic details of this novel invention are clearly shown in the following disclosure and the accompanying drawings, as well as an illustration thereof, and with the same reference characters to refer to the same parts and figures as shown. For the design of this new electrical service unit the quality standards and the in force technical specifications were taken into account, as stated by the Federal Electricity Commission.

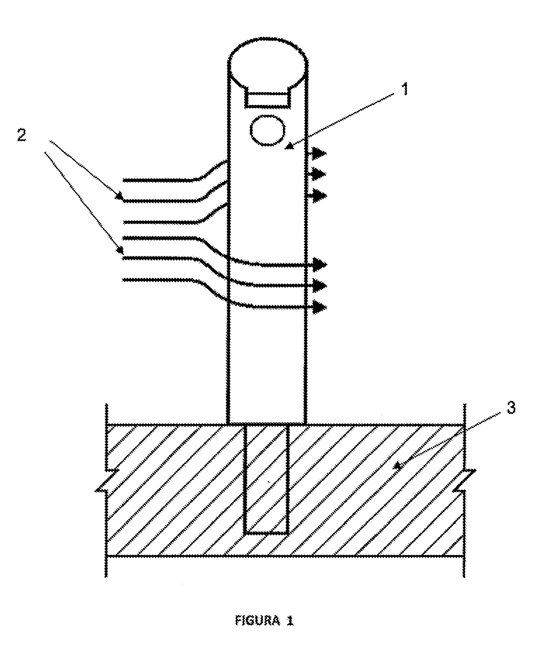

FIGURE 1. A front view of the electrical service unit, window flow lines around the same and the concrete case restraining the same.

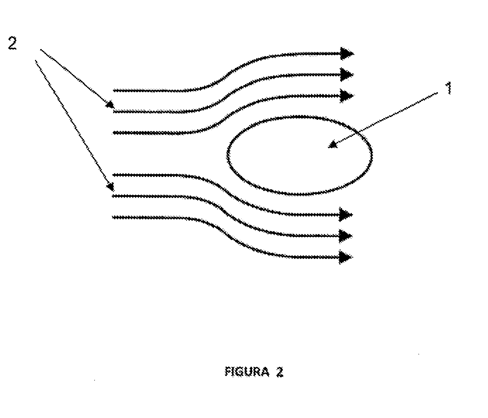

FIGURE 2. Shows the elliptical cross-section of said electrical service unit.

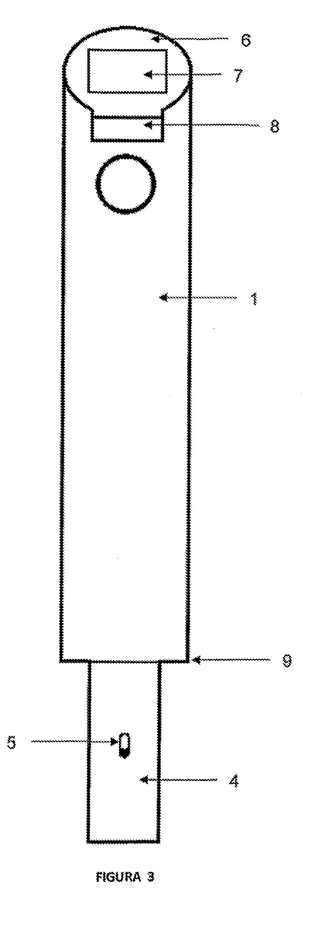

FIGURE 3. Front view of the electrical service unit with the property number on a predetermined space.

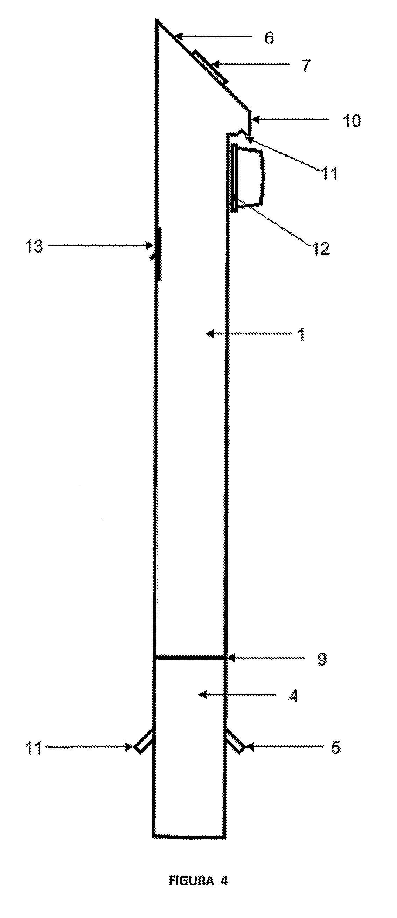

FIGURE 4. Side view of the electrical service unit.

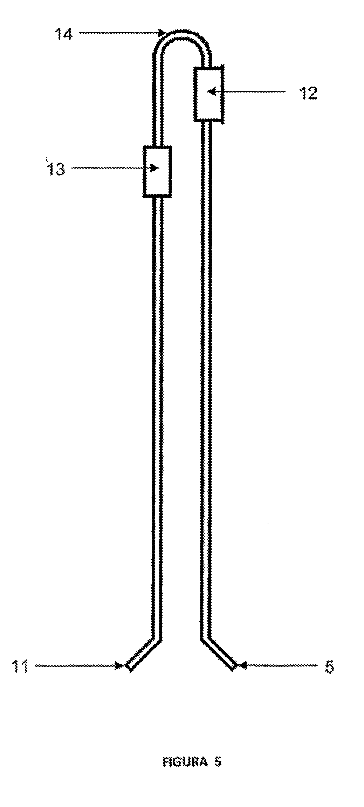

FIGURE 5. Internal electrical system of the electrical service unit.

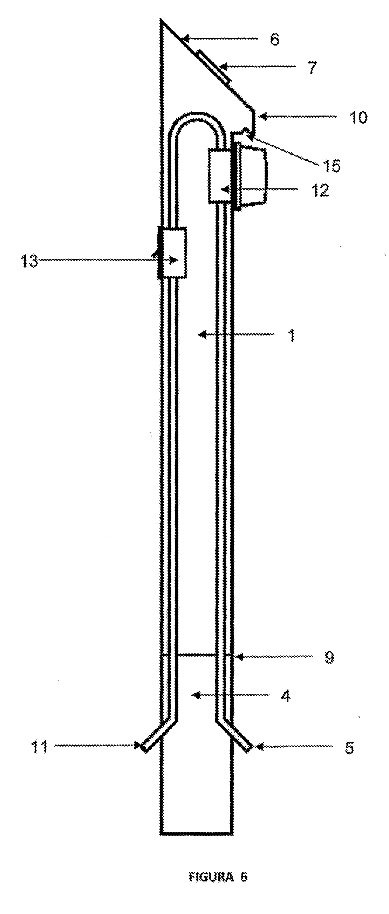

FIGURE 6. Side view of the electrical service unit with the internal electric system, an apparatus for measuring the electric current consumption, and a thermal case.

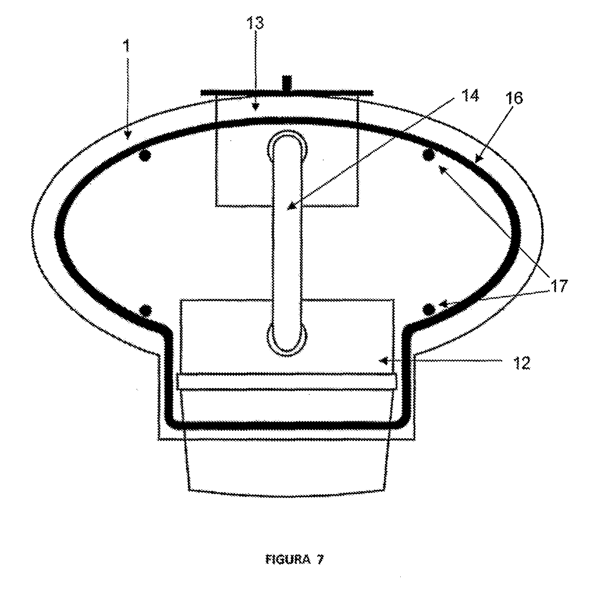

FIGURE 7. Upper cross-sectional view of the electrical service unit.
FIGURE 8. Mechanical support internal structure of the electrical service unit.

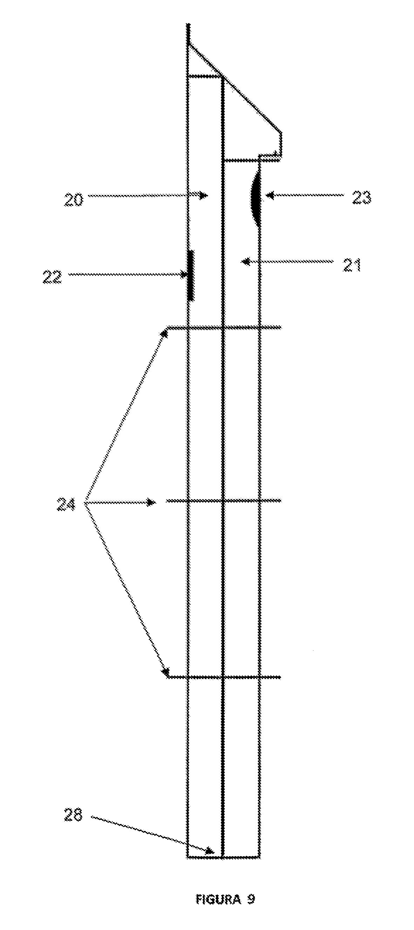

FIGURE 9. Side view of both front and rear covers of the assembled manufacturing mold.

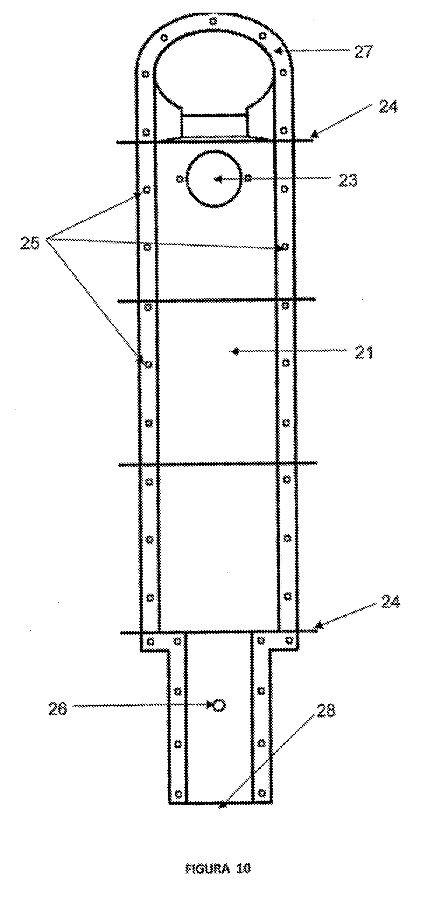

FIGURE 10. View of the outer face of the front cover of the manufacture mold.

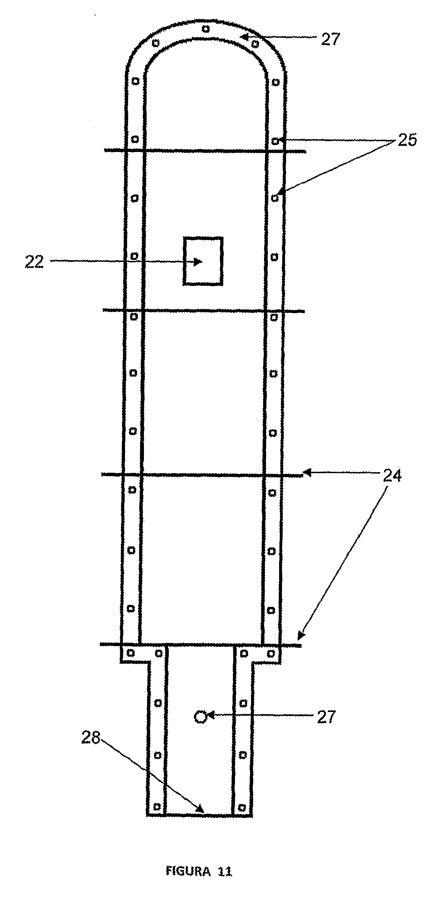

FIGURE 11. View of the outer face of the mold rear cover.

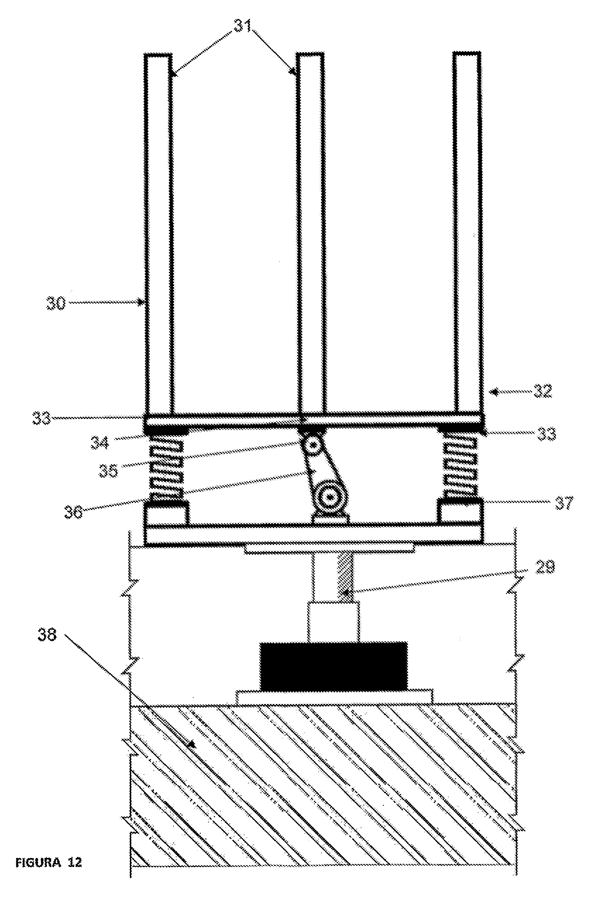

FIGURE 12. Front view of the vibratory table.
FIGURE 13. Front view of the vibratory table with previously assembled molds in an inverted vertical position.

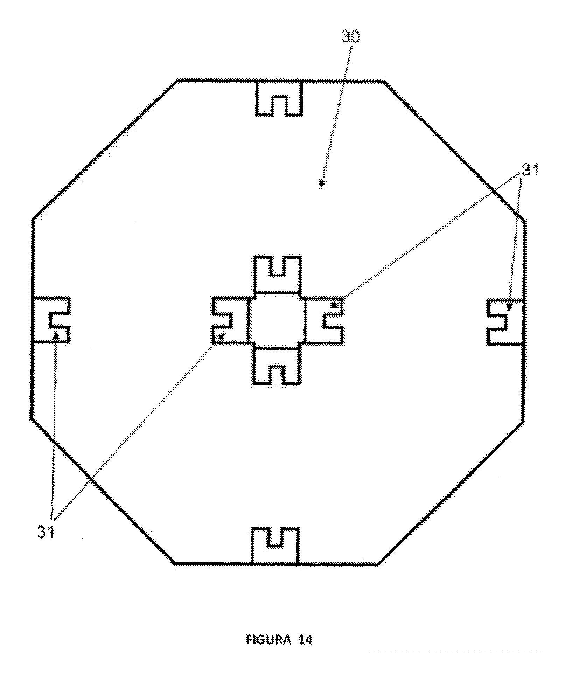

FIGURE 14. Upper view of the vibratory table for four molds.

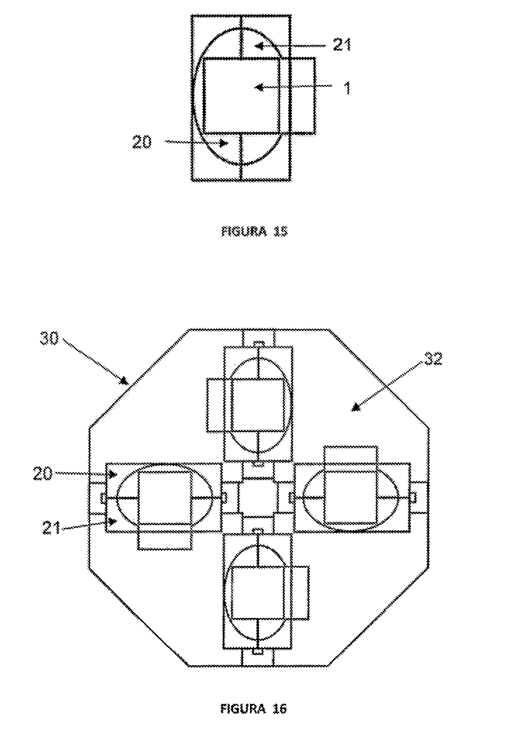

FIGURE 15 Upper view of the inverted mold for the electrical service unit.
FIGURE 16. Upper view of the vibratory table with four molds in an inverted vertical position.

In reference to said figures, an electrical service unit (No. 1) is comprised of:
A monolithic solid concrete body, with elliptical cross-section, having a compressive strength greater than 100 kg/cm², reinforced with a mechanical support internal structure (Figure 17); and a total height that varies depending of the type of application for the electrical service unit, either for commercial or industrial one-phase, two-phases or three-phases, aerial or underground service. The elliptical cross-section provides for the electrical service unit to offer a lesser resistance to the wind (No. 2) due to its streamlined shape. This electrical service unit also has an anchor (No. 4) and a stop (No. 9) whereby the installer man can bury the electrical service unit in a concrete box (No. 3) always to a depth defined according to the above referred to applications. In the present invention, the cross-section of the anchor (No. 4) is rectangular, but it could be any other type of shape, provided that the visible portion of the electrical service unit (No. 1) has a lower cross-section.

Said electrical service unit has a predetermined area to receive the number of the realty (No. 7); said area is located at the upper end thereof and has a slope of 45° relating a horizontal line forming the sole (No. 6). Said realty number (No. 7) can be originally casted or in the alternative, can be manufactured from any other material and installed on said area. In order to protect the electric system from rain, the electrical service unit is provided with a cornice (No. 10) and drip (No. 15) molding, forming a rain protection located just below said 45° slope. At the front portion of said rain protection, an area (No. 8) has been predetermined on which the name of the street or the name of the family can be positioned.

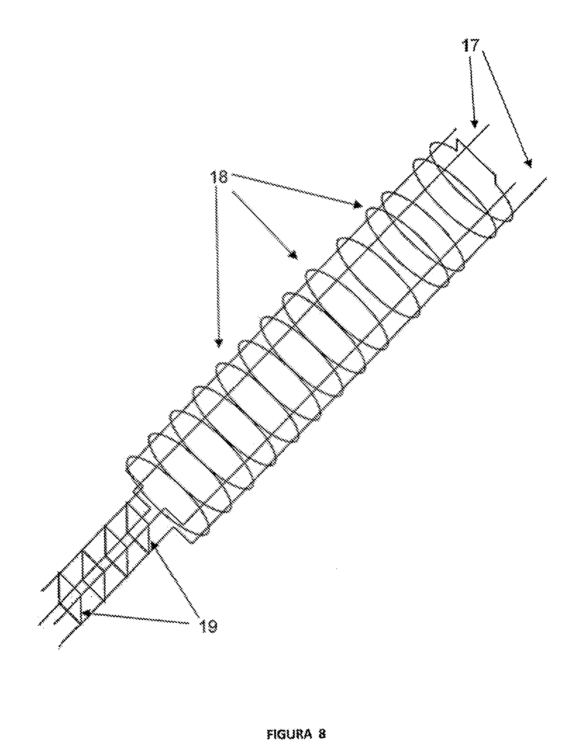

Within the concrete body of the electrical service unit a mechanical support structure (Figure 8) is located, formed by four vertical rods (No. 17) parallel to each other, running from the anchor (No. 4) up to the upper end (No. 6). At the lower portion of the internal structure of said mechanical support, said four vertical rods (No. 17) reduce the separation apart from one another in order to accommodate the profile of said anchor (No. 4). Said vertical rods (No. 17) are connected to each other by means of elliptical rigid ties (No. 18) at the visible area of the electrical service unit (No. 1) and by rectangular rigid ties (No. 19) at the anchor (No. 4) area. At the upper portion of the mechanical support structure (No. 6) said four rods (No. 17) are connected by means of a rigid tie (No. 16), in order to give a structural support to the rain protection (No. 10).

Within the electrical service unit there is also an electric system, formed by a base for a measuring device (No. 12), located at the front upper portion of the visible portion of said electrical service unit (No. 1). Also a base for thermal switch (No. 13) is provided, located at the rear upper portion of the visible portion of said electrical service unit (No. 1). The size of said two bases can vary, depending of the ampere range required for the electric service. For the electric cables installation a flexible hose (No. 5) is employed, running from the front lower portion of said anchor (No. 4), up to the base for the measuring device (No. 12). A second flexible hose (No. 14) connects the upper portion of the measuring device (No. 12) case with the upper portion of the thermal switch (No. 13) case. Finally, a third hose (No. 11) connects the lower portion of the thermal switch case down to the base of the anchor (No. 4) by the rear portion, and runs to the outside.

A machine for the manufacture of the electrical service units disclosed in the above is constituted by a mold, a vibratory table and a pneumatic piston and a hoist to manipulate said electrical service unit and the mold therefor. Said mold for the manufacture of the electrical service units is comprised of two pieces, a front cover (No. 21) and a rear cover (No. 20) assembled to each other by means of screws passing through orifices (No. 25) formed in a "rim" (No. 27) of said front cover (No. 21) and said rear cover (No. 20). Upon assembling, said covers constitute a closed surface with five cavities, disclosed as follows: A first cavity located at the lower portion of the anchor (No. 28) in order to introduce a concrete mixture inside said mold; a second cavity (No. 23) located at the upper portion of said front cover (No. 21) in order to place the base for the case for the device measuring the electrical current consumption (No. 12). A third cavity (No. 22) of said mold is located at the upper portion of the rear cover (No. 20) in order to place the case for the electrical switch box (No. 13). A fourth cavity is located at the lower portion (No. 26) of said front cover of the mold (No. 21) in order to provide for the introduction of a hose (No. 5) through which the electricity lines are inserted. Finally, a fifth cavity is located at the lower portion of the rear cover (No. 27) to provide for the exit of said hose (No. 11), through which the electricity lines leave and proceed into the interior of the building where the electrical service unit (No. 1) is to be installed.

The metal mold is the structure that will receive the concrete mixture within the same, so as to shape the electrical service unit. In order to provide a greater mechanical stability to the mold surface, on the external surface thereof a plurality of joined rigid plates (No. 24) are distributed in a manner perpendicular to the surface of the mold (No. 20 and No. 21).

The vibratory table (No. 30) is used in this invention to support vertically one or more metallic molds and provide a vibratory motion to the concrete mixture inside said mold. These vibrations provided to the mold for a period of time greater than five minutes, allow that voids and air bubbles typical of a concrete mixture, are eliminated.

Said vibratory table (No. 30) is comprised of at least two bars (No. 31) to support vertically a mold (No. 20 and No. 21); a support plate (No. 32) of said bars, three or four flexible supports (No. 33), a mechanical motor (No. 36) with a belt (No. 35) transferring the motion from said motor (No. 36) to the central point (No. 34) of the support plate (No. 32). Said vibratory table (No. 30) is fastened to a metallic plate (No. 37) and this in turn is fastened to a concrete foundation body, deeply buried thereunder (No. 38).

The manufacture process starts with the insertion of the internal structure of mechanical support (Figure 8), as a reinforcement, on the rear cover (No. 20) of the mold. Then the measuring device case (No. 12) is positioned on the cavity (No. 3) of the front cover (No. 21) and the thermal switch case (No. 13) on the cavity (No. 22) of the rear cover (No. 20). Hoses (No. 14), (No. 5) and (No. 11) are inserted into the case for the measuring device (No. 12) and the thermal switch case (No. 13). Finally said front cover (No. 21) and said rear cover (No. 20) are assembled by passing screws into the orifices (No. 25) of both covers.

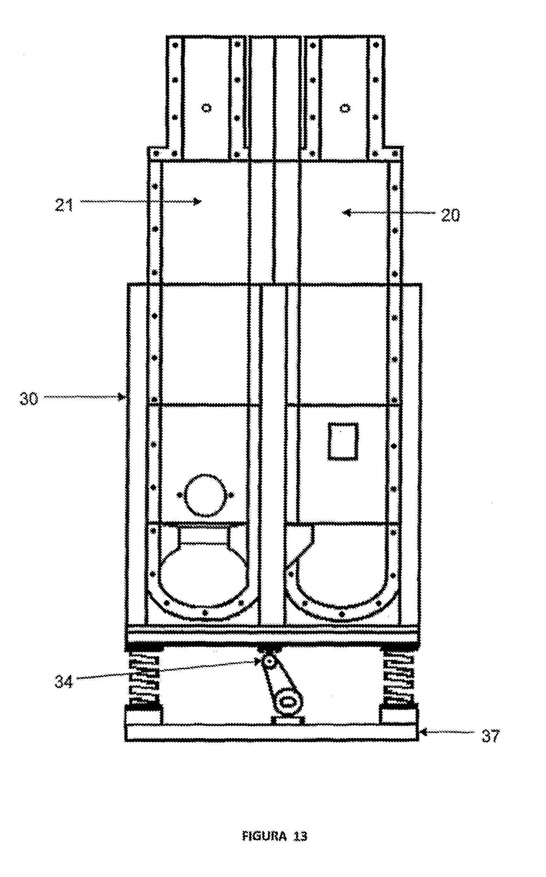

Once the mold assembled, a hoist is fastened to the lower portion, at the anchor area (No. 4). The mold is positioned vertically inverted so that a void (No. 28) in the anchor area (No. 4) of said mold is at the top. Said mold is deposited in this position onto the vibratory table (No. 30). Said molds can be placed on the vibratory table by showing the front cover (No. 21) or the rear cover (No. 20) thereof towards the front of the vibratory table (No. 30). Figure 13 shows two molds placed on the vibratory table (No. 30); the left-hand mold shows the front cover thereof (No. 21), while the right-hand mold shows the rear cover thereof (No. 20), and both molds are in an inverted vertical position.

Upon one or more molds have been positioned on the vibratory table (No. 30), the concrete mixture is poured, either manually or mechanically, by using containers, hoses and funnels for the concrete injection. The characteristics of the concrete mixture are defined by the client's needs and the official requirements of the electricity provider. The following step consists in turn the motor (No. 36) of the vibratory table (No. 30) on for a period of time of from 5 to 30 minutes.

Piston (No. 29) picks once more the molds up so that the hoists carries them out from the vibratory table (No. 30) and leaves them resting for at least 12 hours. Then the mold is disassembled by extracting the screws. Finally the electrical service unit (No. 1) is withdrawn from the mold and leaved resting for at least 12 hours.

## Claims

1. An electrical service unit **characterized by** being constituted by a monolithic solid concrete body, with elliptical cross-section, preferably with a compressive strength greater than 100 kg/cm², added with an internal mechanical support structure, and a total height that varies depending of the type of application for the electrical service unit, either for commercial or industrial, one-phase, two-phases or three-phases, aerial or underground service; the elliptical cross-section; the elliptical cross-section provides for the electrical service unit to offer a lesser resistance to the wind due to its streamlined shape; said electrical service unit also has an anchor and a stop whereby the installer man can bury the electrical service unit in a concrete box always to a depth defined according to the above referred to applications; the cross-section of the anchor is rectangular, but it could be of any other shape, provided that the visible portion of the electrical service unit has a lower cross-section; said electrical service unit has a predetermined area to receive the number of the realty; said area is located at the upper end thereof and has a slope of 45° relating a horizontal line forming the sole; said realty number can be originally casted or in the alternative, can be manufactured from any other material and installed on said area; in order to protect the electric system from rain, the electrical service unit is provided with a cornice and drip molding, forming a rain protection located just below said 45° slope; at the front portion of said rain protection, an area has been predetermined on which the name of the street or the name of the family can be positioned; within the concrete body of the electrical service unit a mechanical support structure is located, formed by four vertical rods parallel to each other, running from the anchor up to the upper end; at the lower portion of the internal structure of said mechanical support, said four vertical rods reduce the separation apart from one another in order to accommodate the profile of said anchor; said vertical rods are connected to each other by means of elliptical rigid ties at the visible area of the electrical service unit and by rectangular rigid ties at the anchor area; at the upper portion of the mechanical support structure said four rods are connected by means of a rigid tie, in order to give a structural support to the rain protection; within the electrical service unit there is also an electric system, formed by a base for a measuring device, located at the front upper portion of the visible portion of said electrical service unit; also a base for thermal switch is provided, located at the rear upper portion of the visible portion of said electrical service unit; the size of said two bases can vary, depending of the ampere range required for the electric service; for the electric cables installation a flexible hose is employed, running from the front lower portion of said anchor, up to the base for the measuring device; a second flexible hose connects the upper portion of the measuring device case with the upper portion of the thermal switch case. Finally, a third hose connects the lower portion of the thermal switch case down to the base of the anchor by the rear portion, and runs to the outside.

2. A machine for the manufacture of electrical service units, **characterized in that** is constituted by a mold, a vibratory table and a pneumatic piston and a hoist to manipulate said electrical service unit and the mold therefor; said mold for the manufacture of the electrical service units is comprised of two pieces, a front cover and a rear cover assembled to each other by means of screws passing through orifices formed in a "rim" of said front cover and said rear cover; said covers, upon assembling, constitute a closed surface with five cavities, disclosed as follows: a first cavity located at the lower portion of the anchor in order to introduce a concrete mixture inside said mold; a second cavity located at the upper portion of said front cover in order to place the base for the case for the device measuring the electrical current consumption; a third cavity of said mold is located at the upper portion of the rear cover in order to place the case for the electrical switch box; a fourth cavity is located at the lower portion of said front cover of the mold in order to provide for the introduction of a hose through which the electricity lines are inserted. Finally, a fifth cavity is located at the lower portion of the rear cover to provide for the exit of said hose, through which the electricity lines leave and proceed into the interior of the building where the electrical service unit is to be installed; the metal mold is the structure that will receive the concrete mixture within the same, so as to shape the electrical service unit; in order to provide a greater mechanical stability to the mold surface, on the external surface thereof a plurality of joined rigid plates are distributed in a manner perpendicular to the surface of the mold; the vibratory table is used in this invention to support vertically one or more metallic molds and provide a vibratory motion to the concrete mixture inside said mold; these vibrations provided to the mold for a period of time greater than five minutes, allow that voids and air bubbles typical of a concrete mixture, are eliminated; said vibratory table is comprised of at least two bars to support vertically a mold; a support plate of said bars, three or four flexible supports, a mechanical motor with a belt transferring the motion from said motor to the central point of the support plate; said vibratory table is fastened to a metallic plate and this in turn is fastened to a concrete foundation body, deeply buried thereunder.

3. A process of manufacture **characterized in that** comprises the following process that starts with the insertion of the internal structure of mechanical support, as a reinforcement, on the rear cover of the mold; then the measuring device case is positioned on the cavity of the front cover and the thermal switch case on the cavity of the rear cover; hoses are inserted into the case for the measuring device and the thermal switch case; finally said front cover and said rear cover are assembled by passing screws into the orifices of both covers; once the mold assembled, a hoist is fastened to the lower portion, at the anchor area; said mold is positioned vertically inverted so that a void in the anchor area of said mold is at the top. Said mold is deposited in this position onto the vibratory table; said molds can be placed on the vibratory table; upon one or more molds have been positioned on the vibratory table, the concrete mixture is poured, either manually or mechanically, by using containers, hoses and funnels for the concrete injection; and the following step consists in turning the motor of the vibratory table on for a period of time of from 5 to 30 minutes; thereafter, upon the molds have been filled up, the vibratory table motor is turned off and the piston picks once more the molds up so that the hoist carry them out from the vibratory table and leave them resting for at least 12 hours; then the mold is disassembled by extracting the screws and finally the electrical service unit is withdrawn from the mold and leaved resting for at least 12 hours.
